# EUROPEAN PATENT APPLICATION

(11) **EP 4 213 071 A1**
(43) Date of publication of application: **19.07.2023**
(21) Application number: 21866025.6
(22) Date of filing: 09.09.2021
(51) Int. Cl.: G06N 3/04

(54) **MODEL PROCESSING METHOD AND APPARATUS, DEVICE, AND COMPUTER-READABLE STORAGE MEDIUM**

(30) Priority: 10.09.2020 CN 202010947896
(71) Applicant: ALIBABA GROUP HOLDING LIMITED, George Town, Grand Cayman (KY)
(72) Inventor: ZHANG, Jie, Hangzhou, Zhejiang 311121 (CN); WANG, Ang, Hangzhou, Zhejiang 311121 (CN); JIANG, Le, Hangzhou, Zhejiang 311121 (CN); LI, Yong, Hangzhou, Zhejiang 311121 (CN)
(74) Representative: Viering, Jentschura & Partner mbB Patent- und Rechtsanwälte
(86) International application number: PCT/CN2021/117359
(87) International publication number: WO 2022/052973

(57) **Abstract**

A model processing method and apparatus, a device, and a computer-readable storage medium. The method comprises: obtaining a first computational graph corresponding to a model to be trained and a parallelization strategy of said model, the parallelization strategy of said model comprising at least one of pipeline parallelism, model parallelism, data parallelism, and operator splitting (S601); adding parallelization information in the first computational graph according to the parallelization strategy of said model to obtain a second computational graph (S602); determining a distributed computational graph according to the second computational graph and computing resources (S603); and training said model according to the distributed computational graph (S604). Multiple parallelization strategies are supported by a computational graph-based graph editing technique, so that multiple parallelization strategies can be integrated into a system, thereby realizing a distributed training framework capable of supporting multiple parallelization strategies.

## Description

The present disclosure claims priority to Chinese Patent Application No. 202010947896.X, filed with the Chinese Patent Office on September 10, 2020 and entitled "MODEL PROCESSING METHOD, APPARATUS, DEVICE, AND COMPUTER-READABLE STORAGE MEDIUM", which is incorporated herein by reference in its entirety.

### TECHNICAL FIELD

The present disclosure relates to information technology filed, and in particular to a model processing method, an apparatus, a device, and a computer-readable storage medium.

### BACKGROUND

With the development of deep neural network, the number of parameters of models, such as a deep learning model, a neural network model, etc., is constantly increasing. However, the update speed of the hardware used to train the model cannot keep up with iteration speed of the model.

A distributed training method is used in the related art to train the model. A typical distributed training method includes: parallelization strategies, such as data parallelism, model parallelism, pipeline parallelism, operator split, hybrid parallelism, etc. Hybrid parallelism may be a combination of two or more of the following: data parallelism, model parallelism, pipeline parallelism, and operator split. However, a distributed training framework in the prior art cannot support various parallelization strategies and their combinations.

### SUMMARY

In order to solve the above technical problems or at least partly solve the above technical problems, the present disclosure provides a model processing method, an apparatus, a device, and a computer-readable storage medium, to implement a distributed training framework which is capable of supporting multiple parallelization strategies.

In a first aspect, an embodiment of the present disclosure provides a model processing method, including: acquiring a first computational graph corresponding to a model to be trained and a parallelization strategy for the model to be trained, wherein the parallelization strategy for the model to be trained includes at least one of the following: pipeline parallelism, model parallelism, data parallelism, and operator split; adding, according to the parallelization strategy for the model to be trained, parallelization information into the first computational graph, to obtain a second computational graph; determining, according to the second computational graph and a computing resource, a distributed computational graph; and training, according to the distributed computational graph, the model to be trained.

In a second aspect, an embodiment of the present disclosure provides a model processing apparatus, including: an acquiring module, configured for acquiring a first computational graph corresponding to a model to be trained and a parallelization strategy for the model to be trained, wherein the parallelization strategy for the model to be trained includes at least one of the following: pipeline parallelism, model parallelism, data parallelism, and operator split; an adding module, configured for adding, according to the parallelization strategy for the model to be trained, parallelization information into the first computational graph, to obtain a second computational graph; a determining module, configured for determining, according to the second computational graph and a computing resource, a distributed computational graph; and a training module, configured for training, according to the distributed computational graph, the model to be trained.

In a third aspect, an embodiment of the present disclosure provides a model processing device, including:
a memory; a processor; and a computer program; wherein the computer program is stored in the memory and is configured to be executed by the processor to implement the method described in the first aspect.

In a fourth aspect, an embodiment of the present disclosure provides a computer-readable storage medium, wherein the computer-readable storage medium stores a computer program, and the computer program, when executed by a processor, implements the method described in the first aspect.

The embodiments of the present disclosure provide a model processing method, an apparatus, a device, and a computer-readable storage medium. The first computational graph corresponding to the model to be trained and the parallelization strategy for the model to be trained are acquired, wherein the parallelization strategy for the model to be trained includes at least one of the following: pipeline parallelism, model parallelism, data parallelism, and operator split; the parallelization information is added into the first computational graph according to the parallelization strategy for the model to be trained, to obtain the second computational graph. In addition, the distributed computational graph is determined according to the second computational graph and the computing resource, and the model to be trained is trained according to the distributed computational graph; it is realized that multiple parallelization strategies are supported based on a graph editing technique of computational graph, so that multiple parallelization strategies may be integrated in one system and a distributed training framework capable of supporting multiple parallelization strategies is realized.

### BRIEF DESCRIPTION OF THE DRAWINGS

The accompanying drawings are incorporated in and constitute a part of the present description, illustrate embodiments consistent with the present disclosure and explain the principles of the present disclosure together with the description.

In order to illustrate technical solutions more clearly in the present disclosure or in the prior art, the accompanying drawings required to be used in the embodiments or prior art descriptions will be simply described, and it is obvious that for those skilled in the art, other drawings may be obtained in accordance with these drawings without creative effort.
FIG. 1 is a schematic diagram of data parallelism provided by an embodiment of the present disclosure;
FIG. 2 is a schematic diagram of model parallelism provided by an embodiment of the present disclosure;
FIG. 3 is a schematic diagram of pipeline parallelism provided by an embodiment of the present disclosure;
FIG. 4 is another schematic diagram of pipeline parallelism provided by an embodiment of the present disclosure;
FIG. 5 is a schematic diagram of operator split provided by an embodiment of the present disclosure;
FIG. 6 is a flow chart of a model processing method provided by an embodiment of the present disclosure;
FIG. 7 is a schematic diagram of an application scenario provided by an embodiment of the present disclosure;
FIG. 8 is a schematic diagram of another application scenario provided by an embodiment of the present disclosure;
FIG. 9 is a flow chart of a model processing method provided by another embodiment of the present disclosure;
FIG. 10 is a schematic diagram of another application scenario provided by an embodiment of the present disclosure;
FIG. 11 is a schematic diagram of another application scenario provided by an embodiment of the present disclosure;
FIG. 12 is a schematic diagram of a distributed training framework provided by an embodiment of the present disclosure;
FIG. 13 is a schematic diagram of model parameter dimension provided by an embodiment of the present disclosure;
FIG. 14 is a schematic diagram of a division method of a first computational graph provided by an embodiment of the present disclosure;
FIG. 15 is a schematic diagram of a division method of a virtual device provided by an embodiment of the present disclosure;
FIG. 16 is a schematic diagram of another application scenario provided by an embodiment of the present disclosure;
FIG. 17 is a schematic structural diagram of a model processing apparatus provided by an embodiment of the present disclosure; and
FIG. 18 is a schematic structural diagram of a model processing device provided by an embodiment of the present disclosure.

### DETAILED DESCRIPTION

In order to make the objects, features, and advantages of the present disclosure clearer, the technical solutions in the present disclosure will be further described. It should note that the embodiments and features in the embodiments of the present disclosure may be combined without conflicting with each other.

In the following description, many specific details are set forth in order to fully understand the present disclosure, but the present disclosure may also be implemented in other ways different from those described herein; obviously, the embodiments in the description are only part of the embodiments of the present disclosure, not all of them.

Generally, a model is trained by using a distributed training method. A typical distributed training method includes: parallelization strategies, such as data parallelism, model parallelism, pipeline parallelism, operator split, etc. However, the distributed training framework in the related art cannot support various parallelization strategies and their combinations. For this problem, an embodiment of the present disclosure provides a model processing method, which will be introduced with specific embodiments below.

In the embodiments of the present disclosure, a parallelization strategy may also be referred to as a parallel strategy, which is specifically a collection of distributed parallel methods. For example, parallelization strategies include: data parallelism, model parallelism, pipeline parallelism, operator split, hybrid parallelism, etc. The hybrid parallelism may be a combination of two or more types of the following parallelisms: data parallelism, model parallelism, pipeline parallelism, and operator split. Data parallelism, model parallelism, pipeline parallelism and operator split will be introduced below in detail.

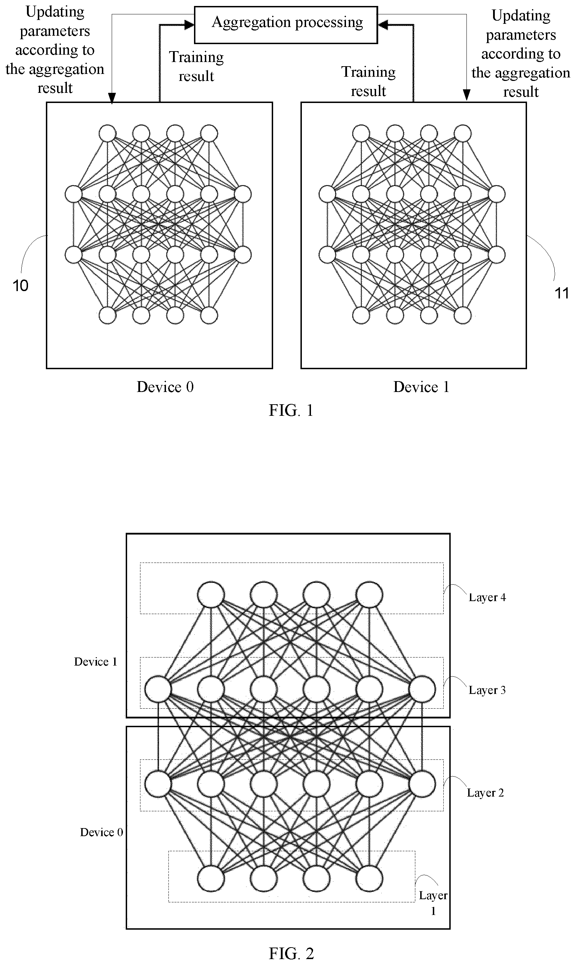

The data parallelism is specifically implemented as follows: each device in multiple devices is loaded with the same copy of a model, that is, the model trained by each device in multiple devices is the same. However, sample data used to train the model is different in each device. For example, the sample data used to train the model in different devices are different data subsets. A collection formed by the data subset in each device is a complete collection which is used to train the model. In addition, each device may synchronize a model parameter across copies at the end of an iteration. FIG. 1 illustrates a schematic diagram of data parallelism. For example, model 10 and model 11 are the same model. Device 0 is used to train model 10 and device 1 is used to train model 11. In an iterative training process, the sample data used by device 0 to train model 10 is recorded as input 1, the sample data used by device 1 to train model 11 is recorded as input 2, and input! and input 2 may be different. Device 0 may output a training result according to input 1, and the training result may be, for example, a gradient. Similarly, device 1 may output a training result according to input 2, and the training result may be, for example, a gradient. Because the training result output by device 0 and the training result output by device 1 may be different, the training result output by device 0 and the training result output by device 1 may be aggregated to obtain an aggregation result. Further, the parameters of model 10 and the parameters of model 11 may be respectively updated according to the aggregation result, to enable the parameters of model 10 and the parameters of model 11 to be the same, and the next iteration training is performed.

The model parallelism is specifically implemented as follows: different devices in multiple devices are used to train different layers of a model. For example, a model may include multiple layers (for example, a network layer), and different devices are responsible for the computation of different layers, that is, different layers of the model are assigned to different devices. Specifically, one layer or multiple layers of the model may be assigned to the same device. FIG. 2 illustrates a schematic diagram of the model parallelism. For example, the model includes layer 1, layer 2, layer 3 and layer 4, and layer 1 and layer 2 may be assigned to device 0, and layer 3 and layer 4 may be assigned to device 1. The input of device 0 is sample data, and the output of device 0 may be the input of device 1.

The pipeline parallelism is an auxiliary parallel strategy, and the pipeline parallelism may be used alone, or may be used with the model parallelism.

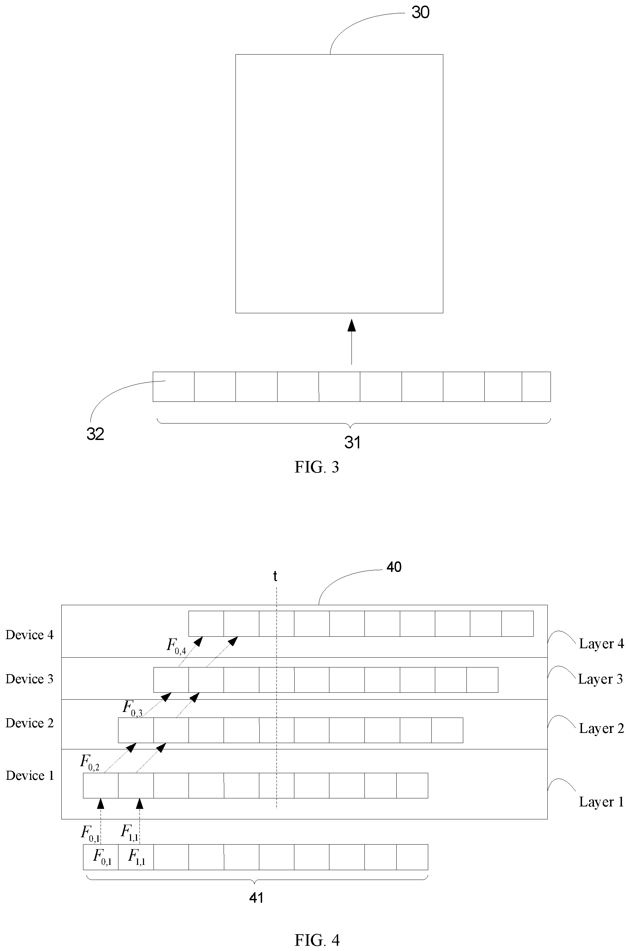

FIG.3 illustrates a schematic diagram of pipeline parallelism which is used alone. For example, 30 represents a model, model 30 is trained by a certain device. 31 represents a data set used to train the model, and the data set may include a large amount of sample data. Because the large amount of sample data occupies relatively large storage space and computing resources, when the pipeline parallelism is used alone, the data set 31 may be divided into multiple smaller shards. For example, 32 represents any one shard of the multiple shards. Further, the device may sequentially input each shard of the multiple shards into model 30 to train model 30, and a training result may be obtained after one shard is input into model 30 to train model 30, and the training result may be, for example, a gradient. For example, the data set 31 is divided into 10 shards, and the 10 shards are sequentially input into model 30 to train model 30, and then 10 training results may be obtained, and the model parameters of the model may be obtained by further processing the 10 training results.

FIG.4 illustrates a schematic diagram of a combination use of the pipeline parallelism and the model parallelism. As shown in FIG. 4, model 40 includes layer 1, layer 2, layer 3 and layer 4. According to the model parallelism described above, it can be known that layer 1, layer 2, layer 3 and layer 4 may be respectively assigned to different devices for computation. For example, device 1 is responsible for computing the layer 1, device 2 is responsible for computing the layer 2, device 3 is responsible for computing the layer 3, and device 4 is responsible for computing the layer 4. It can be understood that the combination use of the pipeline parallelism and the model parallelism shown in FIG. 4 is only a schematic illustration and is not intended to make specifical limit to the disclosure. In the case of the combination use of the pipeline parallelism and the model parallelism, input data 41 for layer 1 may be divided into multiple shards. For example, F_{0,1} and F_{1,1} respectively represents a shard. Device 1 may process multiple shards sequentially. For example, device 1 may process shard F_{0,1} firstly, and the processing result obtained by device 1 after processing shard F_{0,1} may be recorded as F_{0,2}. F_{0,2} may be the input for layer 2, that is, device 1 may send F_{0,2} to device 2. Similarly, the processing result obtained by device 2 after processing shard F_{0,2} may be recorded as F_{0,3}, and device 2 may send F_{0,3} to device 3, and F_{0,3} may be the input for layer 3. Similarly, the processing result obtained by device 3 after processing shard F_{0,3} may be recorded as F_{0,4}, and device 3 may send F_{0,4} to device 4, and F_{0,4} may be the input for layer 4. It can be understood that while device 2 is processing F_{0,2}, device 1 may process the subsequent shard of F_{0,1}, i.e., F_{1,1}, and the flow of the processing results and the subsequent processing of F_{1,1} are similar to those of F_{0,1}, and will not be elaborated herein. In other words, through the combination use of the pipeline parallelism and the model parallelism, devices corresponding to different layers in the model 40 may compute in parallel. For example, at time t, device 1, device 2, device 3 and device 4 may compute in parallel so that the computation efficiency is improved.

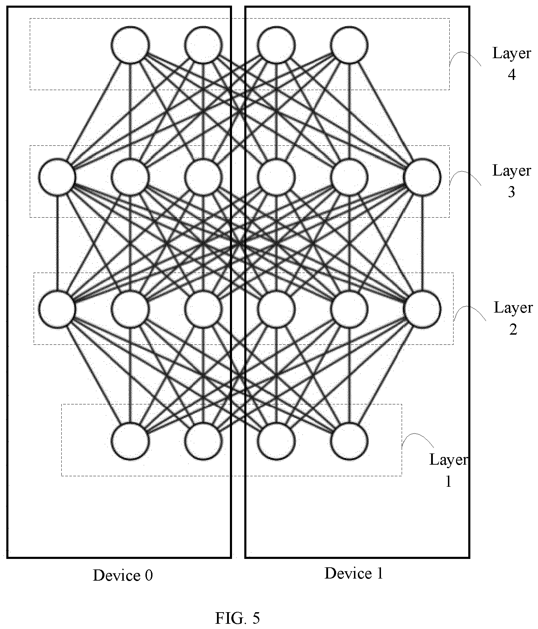

The operator split is specifically implemented as: each layer of a model includes one or multiple operators. The operator in each layer is used to train part of parameters of the model. In addition, the number of parameters corresponding to different layers may be different, or the same. FIG. 5 illustrates a schematic diagram of the operator split. For example, the storage part and computation part of an operator in each layer are split to device 0 and device 1 for storage and computation. In some embodiments, any one or multiple layers in the model may also be split. The storage part of the operator may be the parameters trained by the operator.

Specifically, the foregoing devices may be computing device, such as GPU (Graphics Processing Unit) or CPU (Central Processing Unit), etc.

It can be understood that the foregoing models may be neural network model, or may also be deep learning model, and may also be other types of models. In other words, the embodiments of the present disclosure do not specifically limit the model. Deep learning is a branch of machine learning, which is an algorithm taking artificial neural network as framework and learning representations of materials. In addition, the deep learning model may also be referred to as deep neural network model and specifically, a neural network model with 3 or more layers may be a deep learning model.

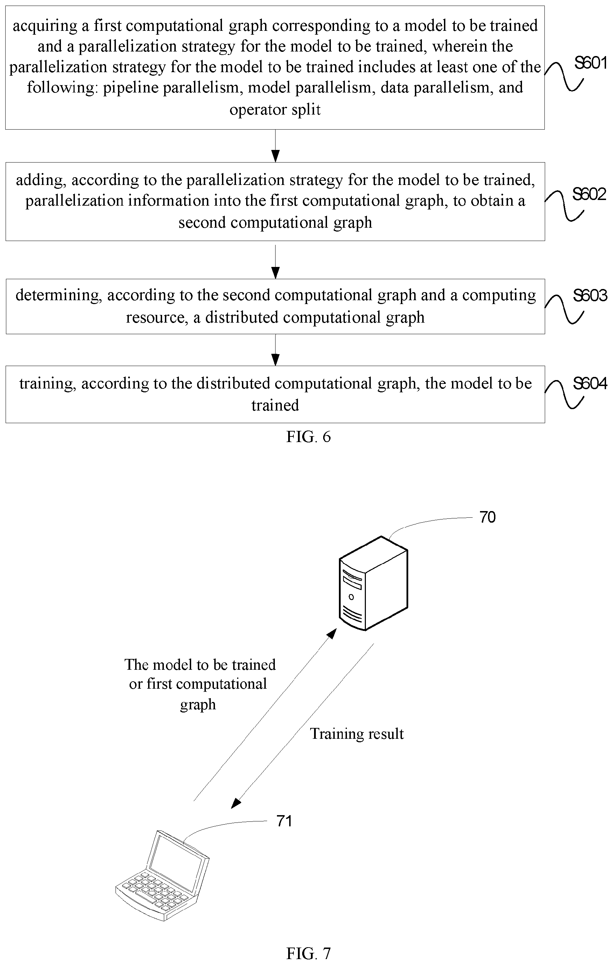

FIG. 6 is a flow chart of a model processing method provided by an embodiment of the present disclosure. The specific steps of the method are as follows:
At S601, acquiring a first computational graph corresponding to a model to be trained and a parallelization strategy for the model to be trained, wherein the parallelization strategy for the model to be trained includes at least one of the following: pipeline parallelism, model parallelism, data parallelism, and operator split.

The model to be trained in this embodiment may be, for example, a neural network model or a deep learning model to be trained, etc. The model to be trained may be a user's single-machine single-card model. In addition, the model in this embodiment may be applied in fields such as computer vision, natural language processing, knowledge graphs, etc.

The model processing method described in this embodiment may specifically be performed by a distributed training framework. The distributed training framework may be deployed on one or more machines, and the machine may specifically include a computer, a computer cluster, a server, etc., and the servers may specifically include a cloud server, a remote server, etc. Each machine may include multiple devices which may be computing device, such as GPU or CPU, etc.

In one possible application scenario, the distributed training framework is deployed on a cloud server. It can be understood that this embodiment does not limit the number of cloud servers. For example, there may be one or more cloud servers. Here a schematic illustration is provided taking one cloud server as an example, such as the cloud server 70 shown in FIG. 7. The model to be trained is stored in a user terminal 71. This embodiment does not limit the specific product form of the terminal 71. For example, the terminal 71 may be a laptop, a desktop computer, a tablet computer, a personal computer (PC), etc. Specifically, the terminal 71 may send the model to be trained to the cloud server 70, and the cloud server 70 generates, after receiving the model to be trained, a computational graph corresponding to the model to be trained, and the computational graph is recorded as a first computational graph. The first computational graph may be the user's original single-machine single-card computational graph. Alternatively, the terminal 71 may generate the first computational graph according to a local model to be trained, and send the first computational graph to the cloud server 70. The cloud server 70 may use the distributed training framework to train the model to be trained, and feed back the training result to the terminal 71.

In another possible application scenario, the cloud server 70 may send the distributed training framework to the terminal 71, and the terminal 71 may deploy the distributed training framework on the terminal 71 or other devices. For example, after the distributed training framework is deployed on the terminal 71, the terminal 71 may generate a first computational graph according to the local model to be trained, take the first computational graph as the input for the distributed training framework, train, through the distributed training framework, the model to be trained, and output the training result. The distributed training framework described in this embodiment may support multiple parallelization strategies. For example, the distributed training framework may not only support the pipeline parallelism, the model parallelism, the data parallelism or operator split, but also support a combination of two or more types of the following: pipeline parallelism, model parallelism, data parallelism and operator split. In other words, the distributed training framework in this embodiment may not only support a single parallelization strategy among pipeline parallelism, model parallelism, data parallelism, and operator splitting, but also support hybrid parallelism. Therefore, the distributed training framework may not only use a single parallelization strategy to train the model to be trained, but also use a hybrid parallel method to train the model to be trained.

In addition, when the distributed training framework acquires the first computational graph of the model to be trained, it may further acquire a parallelization strategy for the model to be trained. The parallelization strategy for the model to be trained may be at least one type of the following: pipeline parallelism, model parallelism, data parallelism, and operator split. In other words, the parallelization strategy for the model to be trained may be a single parallelization strategy, or may also be a hybrid parallelization strategy.

In one possible implementation, acquiring the parallelization strategy for the model to be trained, includes: determining, according to the first computational graph corresponding to the model to be trained, the parallelization strategy for the model to be trained.

For example, after the distributed training framework acquires the first computational graph of the model to be trained, the parallelization strategy for the model to be trained may be determined according to the first computational graph. For example, the distributed training framework may analyze the first computational graph according to machine learning methods such as reinforcement learning, etc., to determine feature information of the model to be trained, and determine the parallelization strategy for the model to be trained according to the feature information.

In another possible implementation, acquiring the parallelization strategy for the model to be trained includes: acquiring a user-selected parallelization strategy for the model to be trained.

For example, the distributed training framework is provided with a user interface, and a user may use the user interface to select a parallelization strategy for the model to be trained. Specifically, the user interface is provided with pipeline parallelism, model parallelism, data parallelism, and operator split. The user may select one or more from pipeline parallelism, model parallelism, data parallelism, and operator split as the parallelization strategy for the model to be trained. In addition, as a possible implementation, after the distributed training framework acquires the user-selected parallelization strategy for the model to be trained, indicator information, such as consumed computing resource, cost, time, performance, etc., of the user-selected parallelization strategy or the combination of various parallelization strategies, may also be computed. Further, the distributed training framework may also feed back the indicator information to the user, so that the user may adjust or confirm the selected parallelization strategy.

At S602, adding, according to the parallelization strategy for the model to be trained, parallelization information into the first computational graph, to obtain a second computational graph.

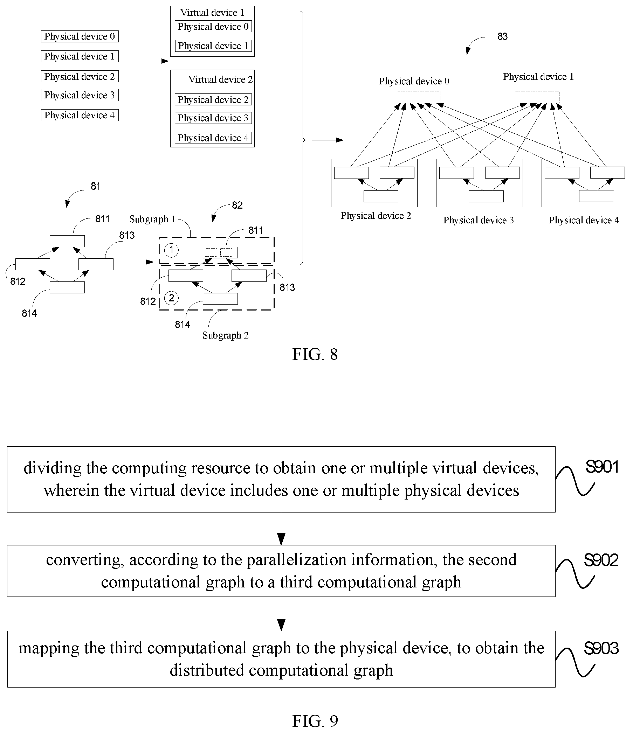

For example, 81 shown in FIG. 8 represents the first computational graph corresponding to the model to be trained. 811, 812, 813, and 814 respectively represent different layers included in the model to be trained. The distributed training framework may add, according to the parallelization strategy for the model to be trained, parallelization information on the basis of the first computational graph 81, in order to obtain the second computational graph 82. The parallelization information is information related to the parallelization strategy for the model to be trained. For example, the parallelization strategy for the model to be trained is: using model parallelism between the first part and the second part of the model to be trained, using data parallelism in the first part, and using operator split in the second part. The parallelization information may include the parallelization strategy for the model to be trained. In addition, the parallelization information may also include parameter information of the parallelization strategy, such as the number of devices required for data parallelism, the number of objects or the number of shards obtained by operator split splitting an object, etc.

Optionally, adding, according to the parallelization strategy for the model to be trained, the parallelization information into the first computational graph, to obtain the second computational graph, includes: dividing, according to the parallelization strategy for the model to be trained, the first computational graph into multiple first subgraphs; and adding, according to the parallelization strategy for the model to be trained, the parallelization information into each first subgraph in the multiple first subgraphs, to obtain the second computational graph.

For example, the distributed training framework may divide the first computational graph into multiple subgraphs according to the parallelization strategy for the model to be trained, and each subgraph may include one or more layers of the model to be trained. For example, the distributed training framework divides the first computational graph into subgraph 1 and subgraph 2 shown in FIG. 8, and subgraph 1 and subgraph 2 are respectively recorded as first subgraph. For example, subgraph 1 corresponds to the second part of the model to be trained, and subgraph 2 corresponds to the first part of the model to be trained. Further, parallelization information is added into each subgraph in subgraph 1 and subgraph 2 according to the parallelization strategy for the model to be trained, and the second computational graph 82 is obtained.

Optionally, the parallelization information includes the parallelization information between different first subgraphs and the parallelization information in each first subgraph.

For example, the parallelization information added into subgraph 1 by the distributed training framework may include parallelization information in subgraph 1, and may also include parallelization information between subgraph 1 and subgraph 2. Similarly, the parallelization information added into subgraph 2 by the distributed training framework may include parallelization information in subgraph 2, and may also include parallelization information between subgraph 1 and subgraph 2.

Optionally, the parallelization information between different first subgraphs includes: a parallelization strategy adopted between different first subgraphs. The parallelization strategy adopted between different first subgraphs includes: the pipeline parallelism and/or the model parallelism.

For example, the parallelization information between subgraph 1 and subgraph 2 includes the parallelization strategy adopted between subgraph 1 and subgraph 2, and the parallelization strategy is the model parallelism.

Optionally, the parallelization information between different first subgraphs further includes: parameter information of the parallelization strategy adopted between different first subgraphs.

For example, in some other embodiments, the parallelization strategy between subgraph 1 and subgraph 2 is: adding pipeline parallelism on the basis of model parallelism. According to the above content, it can be known that the pipeline parallelism may divide the sample data set of the model into multiple smaller shards. When pipeline parallelism is used in combination with model parallelism, the input data of subgraph 1 may be divided into multiple smaller shards, and the input data of subgraph 2 may be divided into multiple smaller shards. In this situation, the parallelization information between subgraph 1 and subgraph 2 may not only include the parallelization strategy adopted between subgraph 1 and subgraph 2, but also include the parameter information of the parallelization strategy adopted between subgraph 1 and subgraph 2. For example, the parameter information may specifically be the number of shards obtained by dividing the input data of subgraph 1, and the number of shards obtained by dividing the input data of subgraph 2. The number of shards obtained by dividing the input data of subgraph 1 and the number of shards obtained by dividing the input data of subgraph 2 may be the same, or may be different. In addition, the parameter information of the parallelization strategy adopted between subgraph 1 and subgraph 2 may be configured by the user or by the distributed training framework.

Optionally, the parallelization information in each first subgraph includes: a parallelization strategy in each first subgraph. The parallelization strategy in each first subgraph includes: data parallelism and/or operator split.

For example, as shown in FIG. 8, the operator split is used in subgraph 1, and the data parallelism is used in subgraph 2. In other embodiments, the data parallelism may be used in subgraph 1, and the operator split may be used in subgraph 2. In addition, the parallelization strategy used in subgraph 1 may also be the same as the parallelization strategy used in subgraph 2. In addition, the parallelization strategy used by each subgraph may also be a hybrid parallelism method. For example, a combination of data parallelism and operator split is used in subgraph 1, and/or a combination of data parallelism and operator split is used in subgraph 2.

Optionally, the parallelization information in each first subgraph further includes: parameter information of the parallelization strategy in each first subgraph.

For example, when the operator split is used in subgraph 1 and the data parallelization is used in subgraph 2, the parallelization information in subgraph 1 may further include the parameter information of operator split, such as the number of split subgraph 1. Similarly, the parallelization information in subgraph 2 may further include the parameter information of data parallelization, such as the number of devices required for performing data parallelization. In addition, the parameter information of the parallelization strategy used in subgraph 1 or subgraph 2 may be configured by the user, or by the distributed training framework.

As shown in FIG. 8, the dotted line boxes on the edges of subgraph 1 and subgraph 2, and the circle 1 and circle 2 indicate the parallelization information between subgraph 1 and subgraph 2, that is, subgraph 1 and subgraph 2 are assigned to different devices for computing. In addition, the parallelization information in subgraph 1 may be a dotted line box in 811, indicating that operator split is used in subgraph 1. In addition, the number of dotted line boxes in 811 may identify the number of split subgraph 1. For example, the two dotted line boxes in 811 indicate that subgraph 1 is split into two devices for performing. Similarly, parallelization information may also be represented in subgraph 2. For example, the parallelization information in subgraph 2 is used to identify data parallelism and the number of devices required for data parallelism, such as 3.

At S603, determining, according to the second computational graph and a computing resource, a distributed computational graph.

For example, physical device 0, physical device 1, physical device 2, physical device 3, and physical device 4 shown in FIG. 8 are respectively specific hardware computing resources. Physical device 0, physical device 1, physical device 2, physical device 3, and physical device 4 may be physical devices from the same machine, or may be physical devices from different machines. In this embodiment, the physical device may be a computing device such as GPU or CPU, etc., as described above. In addition, the physical device may also be a virtual machine. The distributed training framework can divide the hardware computing resource into multiple virtual devices, and this embodiment does not specifically limit the division method herein. For example, physical device 0 and physical device 1 may be divided as virtual device 1, and physical device 2, physical device 3, and physical device 4 may be divided as virtual device 2. Further, a distributed computational graph 83 is obtained according to the second computational graph 82 and the physical devices included in respective virtual device. The distributed computational graph 83 indicates that physical device 0 and physical device 1 are used to perform operator split computation for subgraph 1, and physical device 2, physical device 3 and physical device 4 are used to perform data parallelism computation for subgraph 2.

At S604, training, according to the distributed computational graph, the model to be trained.

For example, the distributed computational graph 83 is input into a Tensorflow or PyTorch training engine, and the Tensorflow or PyTorch training engine performs a training process. Tensorflow is an open-source machine learning platform for machine learning tasks such as image, speech, language understanding, etc. PyTorch is an open-source Python machine learning library implemented based on Torch, which is applied in the field of artificial intelligence, such as natural language processing.

In some other possible application scenarios, the terminal 71 may send, to the cloud server 70, computing resource information and the model to be trained or the first computational graph corresponding to the model to be trained. The cloud server 70 may determine a distributed computational graph according to the computing resource information and the model to be trained or the first computational graph corresponding to the model to be trained. The process of training the model to be trained according to the distributed computational graph may be performed in other servers or training engines provided by other servers. For example, the cloud server 70 may send the distributed computational graph to the terminal 71. After the user receives the distributed computational graph through the terminal 71, the model to be trained may be trained, according to the distributed computational graph, on other servers or training engines provided by other servers. In the embodiments of the present disclosure, the first computational graph corresponding to the model to be trained and a parallelization strategy for the model to be trained are acquired, wherein the parallelization strategy for the model to be trained comprises at least one of the following: pipeline parallelism, model parallelism, data parallelism, and operator split; the parallelization information is added into the first computational graph according to the parallelization strategy for the model to be trained, to obtain the second computational graph. In addition, the distributed computational graph is determined according to the second computational graph and the computing resource; and the model to be trained is trained according to the distributed computational graph; it is realized that multiple parallelization strategies are supported based on a graph editing technique of computational graph, so that multiple parallelization strategies may be integrated in one system and a distributed training framework capable of supporting multiple parallelization strategies is realized.

Based on the above embodiments, determining, according to the second computational graph and the computing resource, the distributed computational graph includes the following steps shown in FIG. 9:

At S901, dividing the computing resource to obtain one or multiple virtual devices, wherein the virtual device includes one or multiple physical devices.

For example, physical device 0 and physical device 1 are divided as virtual device 1, and physical device 2, physical device 3, and physical device 4 are divided as virtual device 2.

Optionally, dividing the computing resource to obtain one or the multiple virtual devices, includes: dividing, according to the parallelization information, the computing resource, to obtain one or the multiple virtual devices.

For example, when physical device 0, physical device 1, physical device 2, physical device 3, and physical device 4 are divided, the division may be specifically performed according to the parallelization information in the second computational graph 82. For example, the parallelization information in the second computational graph 82 indicates that the first computational graph 81 is divided into two subgraphs. Therefore, physical device 0, physical device 1, physical device 2, physical device 3, and physical device 4 may be divided as two virtual devices, such as virtual device 1 and virtual device 2.

At S902, converting, according to the parallelization information, the second computational graph to a third computational graph.

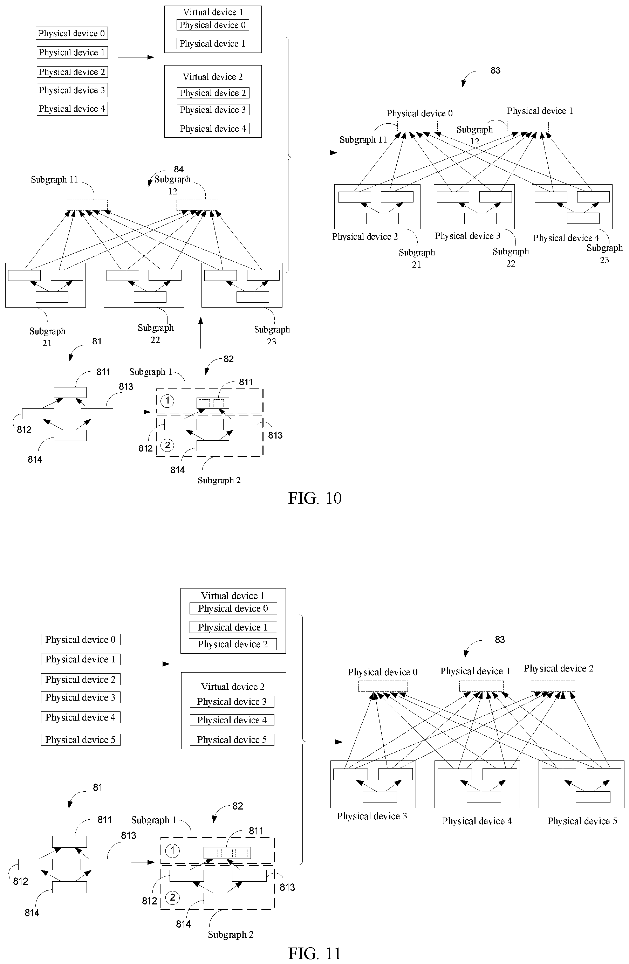

As shown in FIG. 10, after the second computational graph 82 is obtained, the second computational graph 82 may also be converted to a third computational graph 84 according to the parallelization information in the second computational graph 82.

Optionally, converting, according to the parallelization information, the second computational graph to the third computational graph, includes: converting, according to the parallelization information of each first subgraph in the multiple first subgraphs, the first subgraph to a distributed second subgraph; and connecting, according to a connection relationship between the multiple first subgraphs, the distributed second subgraph corresponding to each first subgraph, to obtain the third computational graph.

For example, subgraph 1 and subgraph 2 are respectively recorded as the first subgraph, and each first subgraph may be converted to a distributed second subgraph according to the parallelization information in each first subgraph. For example, subgraph 11 and subgraph 12 are distributed second subgraphs obtained after converting subgraph 1. Subgraph 21, subgraph 22 and subgraph 23 are the distributed second subgraph obtained after converting subgraph 2. Further, according to connection relationship between subgraph 1 and subgraph 2, subgraph 11 is respectively connected with subgraph 21, subgraph 22 and subgraph 23, and subgraph 12 is respectively connected with subgraph 21, subgraph 22 and subgraph 23, so that the third computational graph 84 is obtained.

At S903, mapping the third computational graph to the physical device, to obtain the distributed computational graph.

For example, the third computational graph 84 is mapped to physical device, to obtain the distributed computational graph 83.

Optionally, mapping the third computational graph to the physical device, includes: mapping each second subgraph in the third computational graph to the physical device.

For example, each second subgraph in the third computational graph 84 is mapped to one physical device.

Optionally, mapping each second subgraph in the third computational graph to the physical device, includes: mapping each first subgraph to one virtual device; and mapping each second subgraph corresponding to the first subgraph to a physical device included in the virtual device corresponding to the first subgraph.

For example, subgraph 1 is mapped to virtual device 1, and further, subgraph 11 and subgraph 12 which are corresponding to subgraph 1 are mapped to the physical devices included in virtual device 1. For example, subgraph 11 is mapped to physical device 0 included in virtual device 1, and subgraph 12 is mapped to physical device 1 in virtual device 1. Similarly, subgraph 2 is mapped to virtual device 2, and further, subgraph 21, subgraph 22 and subgraph 23 which are corresponding to subgraph 2 are respectively mapped to the physical devices included in virtual device 2. For example, subgraph 21 is mapped to physical device 2, subgraph 22 is mapped to physical device 3, and subgraph 23 is mapped to physical device 4.

In addition, in other embodiments, subgraph 1 may also be split to three devices, as shown in FIG. 11. Optionally, physical device 0 and physical device 3 may be the same device, or may be different devices. Similarly, physical device 1 and physical device 4 may be the same device, or may be different devices. Physical device 2 and physical device 5 may be the same device, or may be different devices.

In this embodiment, one or more virtual devices are obtained by dividing the computing resource, the virtual devices include one or more physical devices, and the second computational graph is converted to the third computational graph according to the parallelization information, and the third computational graph is mapped to the physical devices, to obtain the distributed computational graph, so that the computing resource may be fully utilized and the utilization rate of the computing resource is improved.

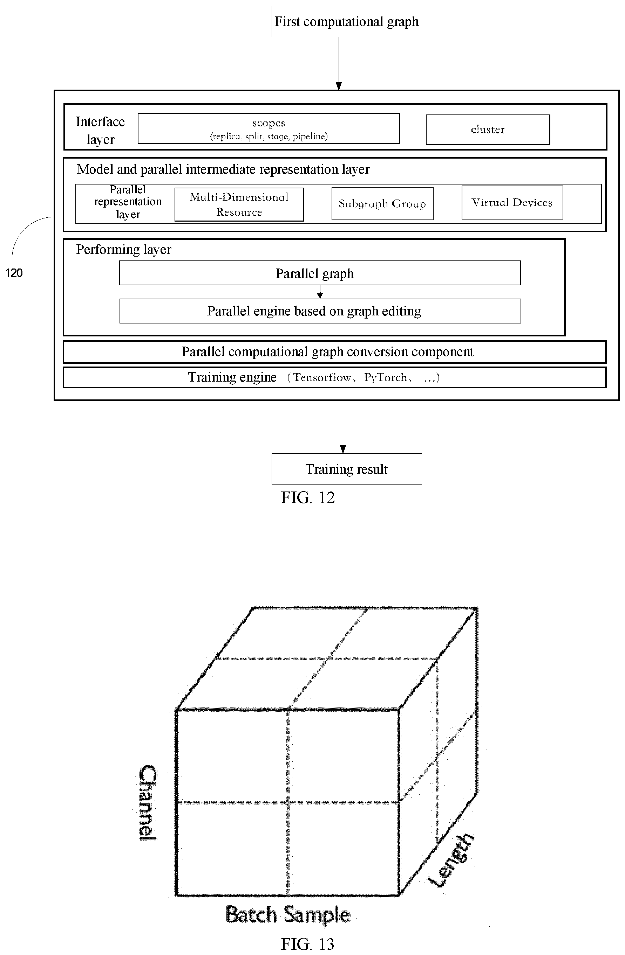

120 shown in FIG. 12 represents a schematic structural diagram of a distributed training framework. The input to the distributed training framework 120 may be the first computational graph as described above. The output of the distributed training framework 120 may be a training result.

As shown in Fig. 12, the distributed training framework 120 includes an interface layer, and the interface layer includes user interfaces, and the user interfaces include scopes and cluster. Users may configure the parallelization strategy for the model to be trained by scopes and cluster.

Scopes is used to identify parallelization strategies for different parts of the model to be trained. For example, scopes may specifically be at least one of the following: replica (data parallelism), split (operator split), pipeline (pipeline parallelism), and stage (model parallelism), that is, the scopes may be any one of the following: replica (data parallelism), split (operator split), pipeline (pipeline parallelism), and stage (model parallelism), or a combination of two or more of the following: replica (data parallelism), split (operator split), pipeline (pipeline parallelism), and stage (model parallelism). Different scopes are used to specify different parallelization strategies. In addition, the scopes interface supports the usage of nesting, so that different parallelization strategies may be nested to achieve various hybrid parallel strategies to accelerate distributed training. Users may divide the model to be trained into multiple subgraphs through the scopes interface, and configure a scopes for each subgraph.

The cluster shown in FIG. 12 is used to divide the computing resource, and the computing resource may also be referred to as hardware resource. The computing resource may specifically be GPU or CPU, etc. For example, the cluster is used to divide the computing resource into multiple virtual computing devices. Further, according to the parallelization strategy for the model to be trained, the subgraphs divided by the user through scopes are mapped to the virtual computing devices, and the mapping process may be completely transparent to the user.

Several specific examples are used below to introduce how to construct various parallelization strategies through the user interface.
1) The construction method of data parallelism is as follows:
   with whale.cluster():
   with whale.replica():

### USER_MODEL_DEFINATION()

USER_MODEL_DEFINATION() represents a user's original model code, that is, the code corresponding to the model to be trained, and with whale.replica(): represents the data parallelism strategy configured by the user for the model to be trained, and with whale.cluster(): represents invoking cluster interface. In other words, the user does not need to modify the original model code, but only needs to add replica scope and cluster to the outer layer of the original model code to enable the distributed training framework to perform data parallelism distributed training on the model to be trained.

2) The construction method of a hybrid parallelization strategy for data parallelism nesting pipeline parallelism and model parallelism is as follows:
with whale.cluster():
with whale.replica():
with whale.pipeline(num_micro_batch=4):
with whale.stage():

### USER_MODEL_DEFINATION()_PART_1()

with whale.stage():

### USER_MODEL_DEFINATION()_PART_2()

USER_MODEL_DEFINATION()_PART_1() represents the first part of the model to be trained, and USER_MODEL_DEFINATION()_PART_2() represents the second part of the model to be trained, and the first part and the second part may be specifically divided by the user. Two with whale.stage(): represent the model parallelization strategy respectively configured by the user for the first part and the second part. with whale.pipeline(num_micro_batch=4): represents the pipeline parallelization strategy respectively configured by the user for the first part and the second part. with whale.replica(): represents the data parallelization strategy respectively configured by the user for the first part and the second part. In other words, the user does not need to modify the original model code, but only needs to add stage scope to the original model code to divide the model to be trained. For example, the model to be trained is divided into the first part and the second part. The first part may correspond to a subgraph and the second part may correspond to another subgraph. Pipeline scope is added to the outer layer of the first part and the second part, which may make the distributed training framework perform pipeline parallelism training on the model to be trained. Based on this, if it needs to perform data parallelism training on the model to be trained, replica scope may also be added to the outer layer of pipeline scope.

3) The construction method of the hybrid parallelization strategy for operator split and data parallelism is as follows:
with whale.cluster():
with whale.replica():

### USER_MODEL_DEFINATION()_PART_1()

with whale.split (split_dim="length"):

### USER_MODEL_DEFINATION()_PART_2()

with whale.replica(): represents the data parallelism strategy configured by the user for the first part of the model to be trained, and with whale.split (split_dim="length"): represents the operator split strategy configured by the user for the second part of the model to be trained. In other words, for operator split, the user needs to add split scope to the part of the model that needs to be split. For data parallelism, the user needs to add replica scope to the part of the model that requires data parallelism.

It can be understood that the construction methods of the foregoing several parallelization strategies are only schematic illustrations and do not limit the description specifically. For example, other parallelization strategies may also be constructed in other embodiments. In other words, replica (data parallelism), split (operator split), pipeline (pipeline parallelism), and stage (model parallelism) may be used alone, or may be used in combination. In a combination use scenario, the specific combination mode may not be limited. In addition, replica (data parallelism), split (operator split), pipeline (pipeline parallelism), and stage (model parallelism) may also be used in a nested manner. When they are used in a nested manner, the specific nesting method or nesting order is not limited either.

In some other embodiments, when the distributed training framework 120 receives the first computational graph, the distributed training framework 120 may automatically add a parallelization strategy to the first computational graph through the scopes in the interface layer.

In this embodiment, replica (data parallelism), split (operator split), pipeline (pipeline parallelism), and stage (model parallelism) are used alone, in combination or in a nested manner, so that users may construct various parallelization strategies, thereby improving the flexibility of the parallelization strategies. In addition, it can be seen from the above examples that the user's original model code, i.e., the code of the user's model definition part, may be based on native interfaces, such as Tensorflow interfaces and PyTorch interfaces, without replacing the programming interfaces of model definition. Therefore, the user does not need to modify the original model code, but only needs to add a few lines of Application Programming Interface (API) calls to the original model code to easily combine the parallelization strategy that the user wants.

As shown in FIG. 12, the distributed training framework 120 also includes a model and parallel intermediate representation layer. A parallel representation layer in the model and parallel intermediate representation layer may analyze the parallelization strategy for the model to be trained to obtain corresponding abstractions. For example, three types of abstractions are provided in this embodiment provides, which are Multi-Dimensional Resource, Subgraph Group and Virtual Device respectively. These three types of abstractions may be used to unify and express different parallelization strategies. After unifying the abstraction of the parallelization strategy, the parallelization strategy may be implemented based on a graph editing technique of computational graph.

For example, data parallelism and operator split may be expressed through Multi-Dimensional Resource. Usually, model parameters have multiple dimensions, such as data sample dimension, channel dimension, height dimension, width dimension, and length dimension, and the data sample dimension is recorded as N, the channel dimension is recorded as C, the height dimension is recorded as H, the width dimension is recorded as W, and the length dimension is recorded as L. Data parallelism may specifically split the data sample dimension N. Operator split may specifically split dimensions except the data sample dimension N. For example, operator split may split one dimension in the channel dimension C, the height dimension H, the width dimension W, and the length dimension L, or may split multiple dimensions in the channel dimension C, the height dimension H, the width dimension W, and length dimension L. The abstraction of Multi-Dimensional Resource supports arbitrary splitting or segmentation for different dimensions. As shown in FIG. 13, Batch Sample represents the data sample dimension, Channel represents the channel dimension, and Length represents the length dimension. For example, Multi-Dimensional Resource may represent data parallelism when the data sample dimension is split. Multi-Dimensional Resource may represent operator split when one or multiple dimensions of the channel dimension C, the height dimension H, the width dimension W, and length dimension L are split. Multi-Dimensional Resource may represent a combination of data parallelism and operator split when the data sample dimension and dimensions other than the data sample dimension are split at the same time.

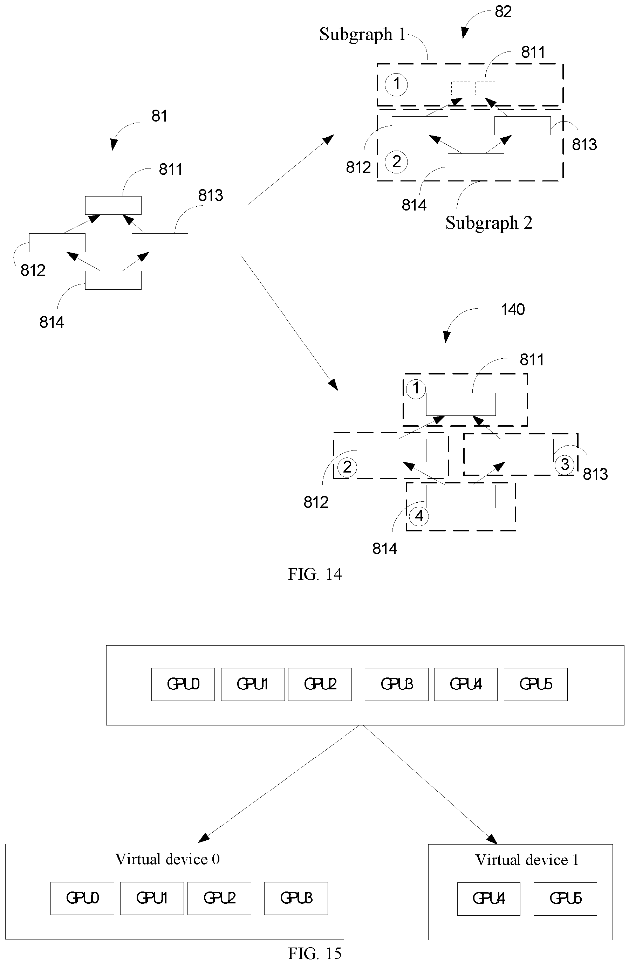

The abstraction of Subgraph Group supports dividing a complete computational graph of the model, such as the first computational graph described in the above embodiments, into multiple subgraphs, and the same or different parallelization strategies may be implemented in each subgraph. Subgraphs may communicate with each other. For example, Subgraph Group may be used to represent model parallelism and/or pipeline parallelism. Specifically, model parallelism and/or pipeline parallelism may be a parallelization strategy between subgraphs, and data parallelism and/or operator split may be a parallelization strategy in a subgraph. As shown in FIG. 14, the first computational graph 81 may have multiple different division methods. For example, the first computational graph 81 may be divided as the second computational graph 82 as described in the above embodiment. Optionally, the first computational graph 81 may also be divided as 140 as shown in FIG. 14, that is, the first computational graph 81 may be divided into 4 subgraphs, and each subgraph includes a layer of the model to be trained.

The abstraction of Virtual Device supports that multiple physical devices are abstracted to be one virtual device. The multiple physical devices may come from the same machine, that is, single-machine multiple-card, or may come from different machines, that is, multiple-machine multiple-card. In some embodiments, the physical device is a GPU specifically, and the multiple physical devices are GPU0 to GPU5 as shown in FIG. 15, there are multiple division methods for GPU0 to GPU5. For example, when GPU0 to GPU2 are from machine A and GPU3 to GPU5 are from machine B, GPU0 to GPU3 may be divided as virtual device 0, and GPU4 and GPU5 may be divided as virtual device 1. It can be understood that, the division method shown in FIG. 15 is only a schematic method, and is not specifically limited in this embodiment. Specifically, the user only needs to perceive virtual device and allocate a corresponding virtual device to a subgraph. The distributed training framework 120 may associate a virtual device with a specific physical device according to the network topology of the hardware computing resource.

In addition, the performing layer in the distributed training framework 120 shown in FIG. 12 may be used to rewrite the second computational graph to construct a third computational graph that may be parallelized, and convert the third computational graph to a distributed computational graph based on the third computational graph. Further, the performing layer may send the distributed computational graph to the training engine, such as Tensorflow, PyTorch, etc.

This embodiment unifies and expresses various parallelization strategies by three types of abstractions which are Multi-Dimensional Resource, Subgraph Group, and Virtual Device, so that the distributed training framework may support any parallelization strategy and various hybrid parallelization strategies, hereby solving the problem of single parallelization strategy. In addition, in this embodiment, various parallelization strategies are realized based on a graph editing technique of computational graph, so that multiple parallelization strategies may be integrated in one system, and the flexibility and diversity of the parallelization strategies are improved.

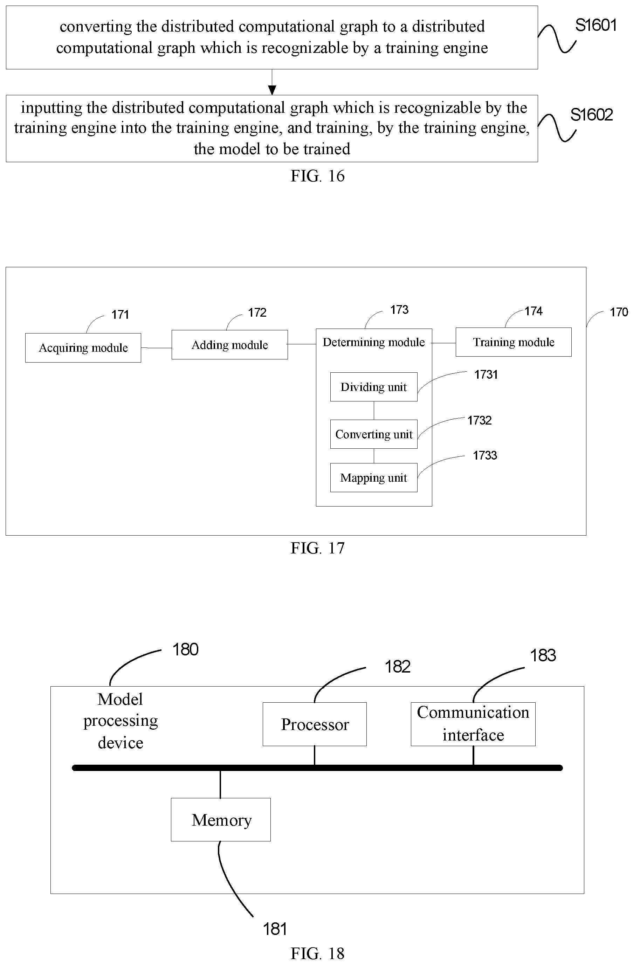

Based on the above embodiments, training, according to the distributed computational graph, the model to be trained, includes the following steps as shown in FIG. 16:

At S1601, converting the distributed computational graph to a distributed computational graph which is recognizable by a training engine.

For example, on the basis of FIG. 8, FIG. 10, and FIG. 11, the distributed computational graph 83 may be converted to a distributed computational graph which is recognizable by a training engine such as Tensorflow or PyTorch. Specifically, the process of converting the distributed computational graph 83 to the distributed computational graph which is recognizable by Tensorflow or PyTorch may be performed by a parallel computational graph conversion component as shown in FIG. 12.

At S 1602, inputting the distributed computational graph which is recognizable by the training engine into the training engine, and training, by the training engine, the model to be trained.

As shown in FIG. 12, the distributed training framework 120 further includes a training engine. After the parallel computational graph conversion component converts the distributed computational graph 83 into the distributed computational graph which is recognizable by Tensorflow or PyTorch, the distributed computational graph which is recognizable by Tensorflow or PyTorch may also be input into the training engine, and the training engine may train the model to be trained.

In this embodiment, the cross-platform compatibility with different training engines such as Tensorflow or PyTorch may be achieved by converting the distributed computational graph to a distributed computational graph which is recognizable by the training engine, thereby improving the compatibility of the distributed training framework. In addition, the coupling between the training engine and the parallelization strategy may also be reduced by converting the distributed computational graph into the distributed computational graph which is recognizable by the training engine, and thus the existing training engines may be compatible and the compatibility of the user's model may be improved.

FIG. 17 is a schematic structural diagram of a model processing apparatus provided by an embodiment of the present disclosure. The model processing apparatus provided by the embodiment of the present disclosure may perform the processing flow provided by the model processing method embodiment. As shown in FIG. 17, the model processing apparatus 170 includes:
an acquiring module 171, configured for acquiring a first computational graph corresponding to a model to be trained and a parallelization strategy for the model to be trained, wherein the parallelization strategy for the model to be trained includes at least one of the following: pipeline parallelism, model parallelism, data parallelism, and operator split; an adding module 172, configured for adding, according to the parallelization strategy for the model to be trained, parallelization information into the first computational graph, to obtain a second computational graph; a determining module 173, configured for determining, according to the second computational graph and a computing resource, a distributed computational graph; and a training module 174, configured for training, according to the distributed computational graph, the model to be trained.

Optionally, the adding module 172 is specifically configured for: dividing, according to the parallelization strategy for the model to be trained, the first computational graph into multiple first subgraphs; and adding, according to the parallelization strategy for the model to be trained, the parallelization information into each first subgraph in the multiple first subgraphs, to obtain the second computational graph.

Optionally, the parallelization information includes the parallelization information between different first subgraphs and the parallelization information in each first subgraph.

Optionally, the parallelization information between different first subgraphs includes: a parallelization strategy adopted between different first subgraphs.

Optionally, the parallelization information between different first subgraphs further includes: parameter information of the parallelization strategy adopted between different first subgraphs.

Optionally, the parallelization strategy adopted between different first subgraphs includes: the pipeline parallelism and/or the model parallelism.

Optionally, the parallelization information in each first subgraph includes: a parallelization strategy in each first subgraph.

Optionally, the parallelization information in each first subgraph further includes: parameter information of the parallelization strategy in each first subgraph.

Optionally, the parallelization strategy in each first subgraph includes: the data parallelism and/or the operator split.

### Optionally, the determining module 173 includes:

a dividing unit 1731, configured for dividing the computing resource to obtain one or multiple virtual devices, wherein the virtual device includes one or multiple physical devices; a converting unit 1732, configured for converting, according to the parallelization information, the second computational graph to a third computational graph; and a mapping unit 1733, configured for mapping the third computational graph to the physical device, to obtain the distributed computational graph.

Optionally, the dividing unit 1731 is specifically configured for: dividing, according to the parallelization information, the computing resource, to obtain one or the multiple virtual devices.

Optionally, the converting unit 1732 is specifically configured for: converting, according to the parallelization information of each first subgraph in the multiple first subgraphs, the first subgraph to a distributed second subgraph; and connecting, according to a connection relationship between the multiple first subgraphs, the distributed second subgraph corresponding to each first subgraph, to obtain the third computational graph.

Optionally, the mapping unit 1733 is specifically configured for: mapping each second subgraph in the third computational graph to the physical device.

Optionally, the mapping unit 1733 is specifically configured for: mapping each first subgraph to one virtual device; and mapping each second subgraph corresponding to the first subgraph to a physical device included in the virtual device corresponding to the first subgraph.

Optionally, the acquiring module 171 is specifically configured for: determining, according to the first computational graph corresponding to the model to be trained, the parallelization strategy for the model to be trained.

Optionally, the acquiring module 171 is specifically configured for: acquiring a user-selected parallelization strategy for the model to be trained.

Optionally, the training module 174 is specifically configured for: converting the distributed computational graph to a distributed computational graph which is recognized by a training engine; and inputting the distributed computational graph which is recognized by the training engine into the training engine, and training, by the training engine, the model to be trained.

The model processing apparatus of the embodiment shown in FIG. 17 may be used to perform the technical solutions of the foregoing method embodiments, and its implementation principles and technical effects are similar, and will not be further elaborated herein.

FIG. 18 is a schematic structural diagram of a model processing device provided by an embodiment of the present disclosure. The model processing device provided by the embodiment of the present disclosure may perform the processing flow provided by the model processing method embodiment. As shown in FIG. 18, the model processing device 180 includes: a memory 181, a processor 182, and a computer program and communication interface 183; wherein the computer program is stored in the memory 181 and is configured to be executed by the processor 182 to perform the model processing method as described above.

In addition, an embodiment of the present disclosure also provides a computer-readable storage medium, wherein the computer-readable storage medium stores a computer program, and the computer program, when executed by a processor, implements the model processing method as described in the above embodiments.

It is to be noted that relational terms such as "first", "second" and the like are used herein only to distinguish an entity or operation from another entity or operation without requiring or implying that there is any such actual relationship or order between these entities or operations. Moreover, the term "comprise", "include" or any other variant thereof is intended to encompass a non-exclusive inclusion, such that a process, method, article or device that includes a series of elements includes not only these elements but also other elements that are not explicitly listed or those elements that are inherent to such a process, method, article or device. In the absence of more restrictions, elements defined by the statement "includes ..." do not preclude the presence of additional identical elements in the process, method, article or device that includes the elements.

The above descriptions are only specific embodiments of the present disclosure, so that those skilled in the art can understand or implement the present disclosure. Various modifications to these embodiments will be apparent to those skilled in the art, and the generic principles defined herein may be implemented in other embodiments without departing from the spirit or scope of the present disclosure. Accordingly, the present disclosure should not be limited to the specific embodiments described herein, but should be accorded the broadest scope consistent with the principles and novel features disclosed herein.

## Claims

1. A model processing method, comprising:
acquiring a first computational graph corresponding to a model to be trained and a parallelization strategy for the model to be trained, wherein the parallelization strategy for the model to be trained comprises at least one of the following: pipeline parallelism, model parallelism, data parallelism, and operator split;
adding, according to the parallelization strategy for the model to be trained, parallelization information into the first computational graph, to obtain a second computational graph;
determining, according to the second computational graph and a computing resource, a distributed computational graph; and
training, according to the distributed computational graph, the model to be trained.

2. The method according to claim 1, wherein the adding, according to the parallelization strategy for the model to be trained, the parallelization information into the first computational graph, to obtain the second computational graph, comprises:
dividing, according to the parallelization strategy for the model to be trained, the first computational graph into a plurality of first subgraphs; and
adding, according to the parallelization strategy for the model to be trained, the parallelization information into each first subgraph in the plurality of first subgraphs, to obtain the second computational graph.

3. The method according to claim 2, wherein the parallelization information comprises the parallelization information between different first subgraphs and the parallelization information in each first subgraph.

4. The method according to claim 3, wherein the parallelization information between different first subgraphs comprises: a parallelization strategy adopted between different first subgraphs.

5. The method according to claim 4, wherein the parallelization information between different first subgraphs further comprises: parameter information of the parallelization strategy adopted between different first subgraphs.

6. The method according to claim 4 or 5, wherein the parallelization strategy adopted between different first subgraphs comprises: the pipeline parallelism and/or the model parallelism.

7. The method according to claim 3, wherein the parallelization information in each first subgraph comprises: a parallelization strategy in each first subgraph.

8. The method according to claim 7, wherein the parallelization information in each first subgraph further comprises: parameter information of the parallelization strategy in each first subgraph.

9. The method according to claim 7 or 8, wherein the parallelization strategy in each first subgraph comprises: the data parallelism and/or the operator split.

10. The method according to claim 2, wherein the determining, according to the second computational graph and the computing resource, the distributed computational graph, comprises:
dividing the computing resource to obtain one or a plurality of virtual devices, wherein the virtual device comprises one or a plurality of physical devices;
converting, according to the parallelization information, the second computational graph to a third computational graph; and
mapping the third computational graph to the physical device, to obtain the distributed computational graph.

11. The method according to claim 10, wherein the dividing the computing resource to obtain one or the plurality of virtual devices, comprises:
dividing, according to the parallelization information, the computing resource, to obtain one or the plurality of virtual devices.

12. The method according to claim 10 or 11, wherein the converting, according to the parallelization information, the second computational graph to the third computational graph, comprises:
converting, according to the parallelization information of each first subgraph in the plurality of first subgraphs, the first subgraph to a distributed second subgraph; and
connecting, according to a connection relationship between the plurality of first subgraphs, the distributed second subgraph corresponding to each first subgraph, to obtain the third computational graph.

13. The method according to claim 12, wherein the mapping the third computational graph to the physical device, comprises:
mapping each second subgraph in the third computational graph to the physical device.

14. The method according to claim 13, wherein the mapping each second subgraph in the third computational graph to the physical device, comprises:
mapping each first subgraph to one virtual device; and
mapping each second subgraph corresponding to the first subgraph to a physical device included in the virtual device corresponding to the first subgraph.

15. The method according to claim 1, wherein the acquiring the parallelization strategy for the model to be trained, comprises:
determining, according to the first computational graph corresponding to the model to be trained, the parallelization strategy for the model to be trained.

16. The method according to claim 1, wherein the acquiring the parallelization strategy for the model to be trained, comprises:
acquiring a user-selected parallelization strategy for the model to be trained.

17. The method according to claim 1, wherein the training, according to the distributed computational graph, the model to be trained, comprises:
converting the distributed computational graph to a distributed computational graph which is recognizable by a training engine; and
inputting the distributed computational graph which is recognizable by the training engine into the training engine, and training, by the training engine, the model to be trained.

18. A model processing apparatus, comprising:
an acquiring module, configured for acquiring a first computational graph corresponding to a model to be trained and a parallelization strategy for the model to be trained, wherein the parallelization strategy for the model to be trained comprises at least one of the following: pipeline parallelism, model parallelism, data parallelism, and operator split;
an adding module, configured for adding, according to the parallelization strategy for the model to be trained, parallelization information into the first computational graph, to obtain a second computational graph;
a determining module, configured for determining, according to the second computational graph and a computing resource, a distributed computational graph; and
a training module, configured for training, according to the distributed computational graph, the model to be trained.

19. A model processing device, comprising:
a memory;
a processor; and
a computer program;
wherein the computer program is stored in the memory and is configured to be executed by the processor to implement the method according to any one of claims 1-17.

20. A computer-readable storage medium, wherein the computer-readable storage medium stores a computer program, and the computer program, when executed by a processor, implements the method according to any one of claims 1-17.
